# EUROPÄISCHE PATENTSCHRIFT

(11) **EP 3 513 954 B1**
(45) Veröffentlichungstag und Bekanntmachung des Hinweises auf die Patenterteilung: **19.05.2021**
(21) Anmeldenummer: 19159944.8
(22) Anmeldetag: 08.03.2018
(51) Int. Cl.: B29C 65/48, B65H 35/02, F16J 15/02

(54) **DICHTBAND**
SEALING STRIP
BANDE D'ÉTANCHÉITÉ

(30) Priorität: 14.03.2017 DE 102017105323
(43) Veröffentlichungstag der Anmeldung: 24.07.2019
(62) Teilanmeldung aus: 18160648.4
(73) Patentinhaber: Tremco CPG Germany GmbH, 92439 Bodenwöhr (DE)
(72) Erfinder: Komma, Markus, 93133 Burglengenfeld (DE); Eidenhardt, Thomas, 92436 Bruck (DE)
(74) Vertreter: Bittner, Bernhard

(56) Entgegenhaltungen:
- DE-U1-202012 101 990

## Beschreibung

Die vorliegende Erfindung betrifft ein Dichtband und insbesondere eine Dichtbandrolle sowie auch ein Verfahren zur Herstellung dieser Dichtbandrolle. Derartige Dichtbänder, die von Dichtbandrollen abgewickelt werden können, werden üblicherweise zum Abdichten von Fugen, beispielsweise zwischen einem Rahmenprofil eines Fensters oder einer Tür einerseits und einer Gebäudewand andererseits verwendet. Im Stand der Technik ist es dabei bekannt, dass zusätzliche Folien an einer Seitenfläche des Dichtbandes die Dampfundurchlässigkeit erhöhen. Allerdings weisen derartige außen angeordnete Folien den Nachteil auf, dass sie beim Einbau beschädigt werden können. Daher sind aus dem Stand der Technik auch Dichtbänder bekannt, welche derartige Folienstreifen im Inneren eines -Schaumstoffes aufweisen. Diese sind jedoch in der Herstellung komplizierter. Aus der EP 2 990 553 A1 ist beispielsweise ein Verfahren bekannt, bei dem ein derartiger Folienstreifen in einen Schaumstoff eingebracht wird. Dieses Verfahren ist jedoch relativ kompliziert und erfordert auch während der Herstellung eine Drehung von einzelnen Schaumstoffstreifen.

Weiter ist aus der DE 20 2012 101 990 U1 ein Dichtband zur Abdichtung zwischen zwei Bauwerksteilen bekannt. Dabei ist das Dichtband von einer Schmalseite zur anderen hin wasserdampfdiffusionsdurchlässig ausgebildet. Ferner weist das Dichtband eine Sperrschicht aus einem von dem Dichtbandmaterial verschiedenen Material auf.

Der vorliegenden Erfindung liegt daher die Aufgabe zu Grunde, ein Dichtband bereitzustellen , welches im Vergleich zum Stand der Technik einfacher herstellbar ist. Diese Aufgabe wird erfindungsgemäß durch das Dichtband nach dem unabhängigen Anspruch erreicht. Vorteilhafte Ausführungsformen und Weiterbildungen sind Gegenstand der Unteransprüche.

Bei einem vorgeschlagenen Verfahren zur Herstellung eines solchen Dichtbandes wird in einem ersten Schritt ein Schaumstoffträger zur Verfügung gestellt und dieser Schaumstoffträger, der auch doubliert sein kann, wird in einer vorgegebenen Transportrichtung transportiert. Dabei weist der Schaumstoffträger eine erste Oberfläche auf sowie eine zweite Oberfläche, wobei diese erste Oberfläche und die zweite Oberfläche einander gegenüberliegen.

In einem weiteren Verfahrensschritt werden erste Schnitte in die erste Oberfläche eingebracht, wobei sich diese ersten Schnitte zumindest auch in einer Dickenrichtung des Schaumstoffträgers erstrecken. In einem weiteren Verfahrensschritt werden zweite Schnitte in die zweite Oberfläche eingebracht, wobei sich diese zweiten Schnitte zumindest auch in einer Dickenrichtung des Schaumstoffträgers erstrecken.

Bei den einander gegenüberliegenden Oberflächen handelt es sich damit um Flächen, die zueinander parallel sind und zwischen denen der eigentliche Schaumstoff angeordnet ist. Bei der Dickenrichtung handelt es sich insbesondere um eine Richtung, welche zu den genannten Oberflächen senkrecht steht. Allerdings werden bevorzugt die Schnitte nicht durchgehend in das Band eingebracht, das heißt das Band wird mit den besagten Schnitten nicht vollständig getrennt, sondern es handelt sich bei den Schnitten besonders bevorzugt lediglich um Einschnitte. Erfindungsgemäß werden jedoch derartige Schnitte sowohl in die erste Oberfläche als auch in die zweite Oberfläche eingebracht. Im Folgenden werden die Begriffe Schnitt und Einschnitt synonym verwendet.

Bei den ersten und zweiten Schnitten handelt es damit bevorzugt um Schnitte bzw. Einschnitte, die in dem oben erwähnten Verfahrensschritt in den Schaumstoff eingebracht werden. Es handelt sich bevorzugt um anfängliche erste und zweite Schnitte bzw. Einschnitte. Wie unten genauer erläutert, werden im weiteren (bevorzugten) Verfahren noch weitere erste und zweite Einschnitte in den Schaumstoffträger eingebracht. Auch bei diesen weiteren Einschnitten wird im Rahmen der Beschreibung zwischen weiteren ersten Schnitten, welche in die erste Oberfläche eingebracht werden und weiteren zweiten Einschnitten, welche in die zweite Oberfläche eingebracht werden, unterschieden. Bevorzugt werden daher die weiteren Einschnitte zeitlich nach den oben erwähnten (anfänglichen) Einschnitten in den Schaumstoffträger eingebracht.

Bei einem weiteren bevorzugten Verfahren wird in wenigstens einen der ersten Schnitte und in wenigstens einen der zweiten Schnitte ein Folienstreifen, ein Klebebandstreifen und/oder ein klebstoffartiges Medium eingebracht. Diese Elemente stellen später die Sperrschicht in dem Schaumstoffträger dar. Ein Folienstreifen oder ein Klebebandstreifen kann dabei beispielsweise von einer Folienbahn oder einer Klebebandbahn abgewickelt bzw. abgezogen werden. Dabei wäre es möglich, dass diese Folienbahn oder die Klebebandbahn an dem jeweiligen Schaumstoff angedrückt werden. Falls ein klebstoffartiges flüssiges Medium verwendet wird, kann dieses beispielsweise unter Verwendung von Düsen, wie Flachdüsen, Schmelzdüsen, Mischdüsen in den Schnitt eingebracht werden und/oder über einen entsprechenden Walzenauftrag, wofür beispielsweise Transferwalzen verwendet werden können. Bevorzugt ist jedoch eine Einbringung mittels Düsen.

Bei diesen hier beschriebenen Einschnitten handelt es sich damit um anfänglich eingebrachte Einschnitte.

Wie unten genauer beschrieben, werden bevorzugt im weiteren Verlauf des Verfahrens weitere erste und zweite Schnitte eingebracht. Bevorzugt werden in wenigstens eine der Oberflächen und bevorzugt in beide Oberflächen mehrere Einschnitte eingebracht, die bevorzugt in einer Breitenrichtung zueinander versetzt sind. Bevorzugt sind diese mehreren Einschnitte dabei äquidistant zueinander. Bevorzugt sind diese Einschnitte jeweils parallel zueinander. Bei einem weiteren vorteilhaften Verfahren sind die Einschnitte in der ersten Oberfläche gegenüber den Einschnitten in der zweiten Oberfläche in der Breitenrichtung B versetzt.

Weiterhin ist es möglich, dass eine Klebebandbahn mittels einer Abziehfolie bereitgestellt werden kann, die beispielsweise von der Klebebandbahn abgelöst wird. Anschließend kann diese Klebebandbahn in den besagten Schnitt eingebracht werden. Zum Einbringen dieser Klebebandbahn können beispielsweise Umlenkelemente verwendet werden, welche schwertartig in den erzeugten Schnitt ragen. Daneben könnte eine derartige Klebebandbahn auch selbst eine Schicht eines Klebebandes oder eine Schicht eines Schmelzklebers umfassen. Auch wäre es möglich, eine solche Folienbahn mit einem Sprühkleber zu beaufschlagen. Bei einer weiteren alternativen Vorgehensweise wäre es auch möglich, die Klebstoffbahn oder dergleichen, oder auch ein flüssiges Klebemedium von unten her und von oben her in den Schaumstoffträger-einzubringen.

Die Schnitte in dem Schaumstoffträger können beispielsweise unter Verwendung mehrerer Messer eingebracht werden, die von oben bzw. von unten an die Schaumstoffträger herangeführt werden. Die Schaumstoffbahn bewegt sich bevorzugt in Transportrichtung. Bevorzugt sind zum Schneiden fix montierte Messer vorgesehen. Diese fix montierten Messer, z.B. Rundmesser oder oszillierenden Messer schneiden sich in die Schaumstoffbahn ein. Rundmesser können sich bevorzugt gegenläufig oder gleichläufig drehen.

Dabei ist es möglich, dass während der Einbringung dieser Schnitte ein Transport des Schaumstoffträgers angehalten wird und dieser insbesondere im Taktbetrieb bewegt wird. Bevorzugt wird jedoch der Schaumstoffträger kontinuierlich bewegt. Wie unten genauer erwähnt, ist es jedoch bei einer Ausgestaltung des Verfahrens gewünscht, keine genau in der Dickenrichtung verlaufenden Schnitte zu erzeugen, sondern schräge Schnitte. Daher wird unter in der Dickenrichtung verlaufende Schnitte verstanden, dass diese Schnitte wenigstens eine Komponente aufweisen, die sich auch in der Dickenrichtung erstreckt, dazu jedoch bevorzugt auch eine Komponente, die sich in einer Breitenrichtung des Schaumstoffträgers erstreckt. Daneben erstrecken sich die Schnitte bevorzugt auch in der Längsrichtung des Schaumstoffträgers bzw. in dessen Transportrichtung. Bei einem weiteren vorteilhaften Verfahren werden Schnitte erzeugt, die sich im Wesentlichen nur in der Dickenrichtung erstrecken.

Bei einer weiteren bevorzugten Ausführungsform werden daher die Schnitte in einem von 0 ° verschiedenen Winkel gegenüber der Dickenrichtung eingebracht. Vorteilhaft ist dieser Winkel größer als 5 °, bevorzugt größer als 10 ° und bevorzugt größer als 15 °. Bei einer weiteren bevorzugten Ausführungsform ist dieser Winkel kleiner als 60 °, bevorzugt kleiner als 50° und besonders bevorzugt kleiner als 45 °.

Bei einem weiteren bevorzugten Verfahren sind die ersten Schnitte und die zweiten Schnitte gegenüber der Dickenrichtung unterschiedlich geneigt. Insbesondere ist es dabei möglich, dass die beiden Schnitte in der Ober- und Unterseite genau spiegelsymmetrisch gegenüber der Dickenrichtung geneigt sind. Bevorzugt ist im vollexpandierten Zustand der Winkel, den die Schnitte einschließen, größer als der jeweilige Winkel gegenüber der Dickenrichtung.

Bei einem weiteren bevorzugten Verfahren wird der Schaumstoffträger nach dem Einbringen der Schnitte wenigstens abschnittsweise in der Breitenrichtung (d.h. insbesondere in einer zu der Transportrichtung senkrecht stehenden Richtung) gedehnt. Eine derartige Dehnung kann beispielsweise durch aufeinander folgende Führungswalzen erfolgen. Durch dieses Dehnen des Schaumstoffträgers werden insbesondere auch die Schnitte aufgeweitet, sodass in die Schnitte leichter ein Folienelement oder der Klebstoff eingebracht werden kann.

Bei einem weiteren bevorzugten Verfahren wird in wenigstens einen Schnitt ein streifenförmiges Element eingebracht, wobei wenigstens ein Endabschnitt dieses streifenförmigen Elements auch an einer Oberfläche anliegt. Sobald beispielsweise in einen Einschnitt an der ersten Oberfläche ein derartiges Folienelement eingebracht wird, kann auch ein Endabschnitt an dieser besagten ersten Oberfläche anliegen bzw. angeklebt werden. Bevorzugt wird daher das Streifenelement in wenigstens einem Bereich abgewinkelt, insbesondere in demjenigen Bereich, in dem es aus dem besagten Einschnitt heraustritt. Bevorzugt wird dieses streifenförmige Element adhäsiv an der besagten Oberfläche des Schaumstoffträgers und/oder an beiden Schnittflanken befestigt bzw. angeklebt.

Bei einem weiteren bevorzugten Verfahren wird nach dem Einbringen der Folienstreifen bzw. des Klebstoffs in die anfänglichen ersten und zweiten Schnitte Schaumstoffträgers die Spannung des Schaumstoffträgers wieder zurückgestellt bzw. gelockert, sodass sich die Schnitte um die eingebrachten Folienelemente schließen können. Damit werden bevorzugt die "anfänglichen" Schnitte nach dem Einbringen der Folien geschlossen bzw. verklebt, bevorzugt um wieder einen zusammenhängenden Schaumstoffkörper zu erhalten.

Erst im Anschluss werden bevorzugt die weiteren Schnitte in den Schaumstoffträger eingebracht. Bevorzugt werden die weiteren Schnitte derart eingebracht, dass sie sich mit den jeweils ersten eingebrachten Schnitten schneiden. Diese bedeutet, dass beispielsweise ein weiterer Schnitt, der in eine untere Oberfläche des Schaumstoffträgers eingebracht wurde, einen ersten Schnitt, der bereits vorher in eine obere Oberfläche des Schaumstoffträgers eingebracht wurde, schneidet. Durch die unterschiedlichen Erstreckungsrichtungen schneiden sich dabei diese Einschnitte unter einem vorgegebenen von 0 ° verschiedenen Winkel. Bei einem weiteren bevorzugten Verfahren erstrecken sich die ersten Schnitte und oder die zweiten Schnitte um mehr als 50 % der Dicke des Schaumstoffträgers. Bevorzugt erstrecken sich diese ersten und zweiten Schnitte um mehr als zwei Drittel der Breite des Schaumstoffträgers. Bevorzugt ragen die jeweiligen Einschnitte so weit in den Schaumstoffträger hinein, dass sie zumindest in der Dickenrichtung des Schaumstoffträgers sich gegenseitig überdecken (betrachtet in einer Projektion entlang der Transportrichtung des Schaumstoffträgers). Auf diese Weise kann, wie später genauer erläutert wird, eine durchgehende Sperrschicht ausgebildet werden.

Bei einem bevorzugten Verfahren werden in einem weiteren Verfahrensschritt weitere erste und zweite Schnitte in die ersten und zweiten Oberflächen eingebracht.

Bevorzugt sind die anfänglichen ersten Schnitte, welche in die erste Oberfläche eingebracht wurden und die anfänglichen zweiten Schnitte, welche in die zweite Oberfläche eingebracht wurden in der Breitenrichtung des Schaumstoffträgers bezüglich einander versetzt. Durch diesen Versatz wird erreicht, dass an keiner Stelle der Schaumstoffträger vollständig durchtrennt wird.

Bevorzugt sind auch die weiteren ersten Schnitte, welche in die erste Oberfläche eingebracht wurden und die weiteren zweiten Schnitte, welche in die zweite Oberfläche eingebracht wurden in der Breitenrichtung des Schaumstoffträgers bezüglich einander versetzt. Durch diesen Versatz wird ebenfalls erreicht, dass an keiner Stelle der Schaumstoffträger vollständig durchtrennt wird.

Bevorzugt sind die anfänglichen ersten Schnitte, welche in die erste Oberfläche eingebracht wurden und die weiteren ersten Schnitte, welche in die erste Oberfläche eingebracht wurden in der Breitenrichtung des Schaumstoffträgers bezüglich einander versetzt.

Bevorzugt sind die anfänglichen zweiten Schnitte, welche in die zweite Oberfläche eingebracht wurden und die weiteren zweiten Schnitte, welche in die zweite Oberfläche eingebracht wurden in der Breitenrichtung des Schaumstoffträgers bezüglich einander versetzt.

Bei einem weiteren bevorzugten Verfahren durchtrennt wenigstens ein weiterer Schnitt einen Abschnitt eines ersten Schnitts und insbesondere auch ein eingebrachtes Folienelement. Dies bedeutet, dass während des Verfahrens wenigstens ein Bereich der in den Schnitt eingebrachten Folie durchtrennt wird. Nach dem Einbringen der jeweils weiteren Schnitte wird bevorzugt der Schaumstoffträger wiederum gespannt, sodass sich auch die weiteren Schnitte aufweiten. Bevorzugt werden in diese Schnitte wiederum in der Dickenrichtung Folienelemente oder auch ein Klebstoff eingebracht. Auf diese Weise entsteht insgesamt ein Schaumstoffträger mit eingebrachten Folien, das heißt genauer genommen werden zwei Folienelemente eingebracht, die sich jedoch in einem bestimmten Bereich überschneiden, sodass sich insgesamt über die vollständige Dickenrichtung ein Folienelement (bzw. zwei sich kreuzende Folienelemente) erstreckt.

Bei einem weiteren Verfahrensschritt wird die Schaumstoffbahn komprimiert und besonders bevorzugt auf eine Selbstklebung und insbesondere eine Selbstklebeschicht (und oder ein Selbstklebeband, wie beispielsweise ein doppelseitiges Klebeband) komprimiert. Bei einem weiteren Verfahrensschritt wird diese komprimierte Bahn auf eine Rolle und insbesondere auf eine Großrolle aufgerollt, sodass insgesamt eine Dichtbandrolle mit eingelegten Folienstreifen entsteht. Die Selbstklebeschicht bzw. Selbstklebefolie befindet sich bevorzugt an einer der beiden Oberflächen.

Bei einem bevorzugten Verfahren wird daher an der Schaumstoffbahn und genauer an einer Außenoberfläche der Schaumstoffbahn eine Klebeschicht und insbesondere eine Selbstklebefolie angebracht. Bevorzugt wird diese Klebeschicht und/oder Selbstklebefolie an wenigstens einer der beiden Oberflächen angebracht, in welche die Einschnitte eingebracht wurden. Bevorzugt überdeckt diese Klebeschicht und/oder Selbstklebefolie die genannten Einschnitte zumindest teilweise.

In einem weiteren Verfahrensschritt wird die Großrolle durchtrennt. Vorteilhaft werden dabei Streifen abgetrennt, wobei besonders bevorzugt jeder dieser Streifen ein von der Oberseite her eingebrachtes Folienelement und ein von der Unterseite her eingebrachtes Folienelement aufweist, welche sich an einem vorgegebenen Kreuzungspunkt schneiden.

Die vorliegende Erfindung ist auf ein Dichtband gerichtet. Dieses Dichtband weist einen Schaumstoffträger auf, wobei dieser Schaumstoffträger sich in einer vorgegebenen Längsrichtung erstreckt und eine erste Oberfläche sowie eine zweite Oberfläche aufweist, wobei diese Oberflächen einander gegenüber liegen. Bevorzugt ist in der ersten Oberfläche mind. ein erster Schnitt angeordnet, der sich zumindest auch in einer Dickenrichtung erstreckt, wobei sich diese Dickenrichtung von der ersten Oberfläche zu der zweiten Oberfläche erstreckt sowie in der zweiten Oberfläche mind. ein Schnitt, der sich ebenfalls zumindest auch in dieser Dickenrichtung erstreckt, wobei sich wenigstens einer der Schnitte in einem von 0 ° verschiedenen Winkel gegenüber der Dickenrichtung erstreckt und in den beiden Schnitten jeweils ein Folienstreifen, ein Klebebandstreifen und/oder ein klebstoffartiges Medium eingebracht ist.

Es wird daher auch vorrichtungsseitig vorgeschlagen, dass das Dichtband sowohl einen Einschnitt in der ersten Oberfläche als auch einen Einschnitt in der zweiten Oberfläche aufweist, wobei in diesen Schnitten das Folienelement oder der Klebstoff oder das Klebband eingebracht ist. Erfindungsgemäß kreuzen der erste und der zweite Schnitt sich. Auf diese Weise wird insgesamt in der Dickenrichtung ein durchgehendes Folienband bzw. eine durchgehende Absperrung erreicht.

Bei einer weiteren vorteilhaften Ausführungsform liegt wenigstens ein Abschnitt eines Folienstreifens auch an einer Oberfläche, in der der Schnitt eingebracht wurde, an. Vorteilhaft liegen Endabschnitte beider Folienelemente jeweils an denjenigen Oberflächen an, an denen sie eingebracht wurden bzw. in denen die besagten Einschnitte eingebracht wurden.

Bei einer weiteren vorteilhaften Ausführungsform handelt es sich bei dem Schaumstoff um einen imprägnierten Schaumstoff. Bei einer weiteren vorteilhaften Ausführungsform handelt es sich bei dem Schaumstoff um einen rückstellfähigen Schaumstoff. Bei einer weiteren vorteilhaften Ausführungsform ist das Dichtband komprimiert und besonders bevorzugt als Rolle konfektioniert. Das Dichtband ist bevorzugt zur verzögerten Rückstellung imprägniert.

Bei einer weiteren bevorzugten Ausführungsform weist der weitere Schnitt ein V-förmiges Profil auf. Bei einer weiteren bevorzugten Ausführungsform weisen die (anfänglichen) Schnitte und die weiteren Schnitte eine unterschiedliche Erstreckung in der Dickenrichtung des Schaumstoffträgers auf. So kann sich bevorzugt der anfängliche Schnitt in dieser Dickenrichtung wenigstens 1,5 mal so weit, bevorzugt wenigstens zweimal so weit wie der weitere Schnitt erstrecken. Dieser V-förmige Schnitt ragt bevorzugt weniger tief in den Schaumstoffkörper als die oben genannten ersten Einschnitte. Bevorzugt ragt dieser V-förmige Schnitt um weniger als 60%, bevorzugt um weniger als 50%, bevorzugt um weniger als 40% und besonders bevorzugt um weniger als 30% der Dicke des Schaumstoffträgers in diesen hinein

Bei einer weiteren vorteilhaften Ausführungsform ist in wenigstens einer Oberfläche ein weiterer Schnitt vorgesehen und in diesem weiteren Schnitt liegt ein Folienstreifen oder ein Klebebandstreifen doppellagig ein. Genauer liegt dieser Folienstreifen bzw. Klebebandstreifen bevorzugt an den beiden Flanken des Einschnitts an bzw. auf.

Bei einem weiteren vorteilhaften Verfahren werden in wenigstens einem Verfahrensschritt V-förmige Schnitte in den Schaumstoffträger eingebracht. Bei diesem Verfahren ist es bevorzugt dass zunächst, wie oben beschrieben, die anfänglichen ersten und zweiten Schnitte in den Schaumstoffträger eingebracht werden. Nach dem Einbringen der Folienstreifen, Klebebandstreifen oder des klebstoffartigen Mediums in diese Schnitte und dem anschließenden Verschließen dieser Schnitte, werden bevorzugt die genannten V-förmigen Schnitte in den Schaumstoffträger eingebracht. Bevorzugt werden die V-förmigen Schnitte an der jeweils gegenüberliegenden Oberfläche des Schaumstoffträgers (also derjenigen Oberfläche, welche der Oberfläche mit dem zugehörigen anfänglichen Schnitt gegenüberliegt) eingebracht.

Bevorzugt werden die V-förmigen Schnitte in einer derartigen Tiefe eingebracht, dass sie nahezu oder vollständig an die in die ersten Schnitte eingebrachten Folienstreifen heranreichen. Auch auf diese Weise entsteht im Ergebnis eine geschlossene Folienschicht.

Bevorzugt werden in die V-förmigen Einschnitte ebenfalls Folienstreifen, Klebebandstreifen oder ein klebstoffartiges Medium eingebracht. Dabei kann bevorzugt auch ein V-förmiger Folienstreifen eingebracht werden.

Bevorzugt ragen auch diese in die V-förmigen Einschnitte eingebrachten Folienstreifen aus dem V-förmigen Schnitt heraus und liegen bevorzugt auf der jeweiligen Oberfläche an.

Bei einem weiteren bevorzugten Verfahren sind bevorzugt die weiteren ersten und zweiten Einschnitte, insbesondere die V-förmigen Einschnitte in der Breitenrichtung des Schaumstoffträgers nicht gegenüber den ersten und zweiten Einschnitten versetzt.

Weitere Vorteile und Ausführungsformen ergeben sich aus den beigefügten nicht maßstäblichen Zeichnungen:
Darin zeigen:
- Fig. 1: Einen Schaumstoffträger für ein erfindungsgemäßes Dichtband;
- Fig. 2: Einen Schaumstoffträger mit ersten eingebrachten Einschnitten;
- Fig.3: Den Schaumstoffträger aus Figur 2 mit den eingebrachten und aufgeweiteten Einschnitten;
- Fig. 4: Den Schaumstoffträger aus Figur 3 mit in den Einschnitten eingebrachten Folienelementen;
- Fig. 5: Den Schaumstoffträger mit um die Folienelemente geschlossenen Einschnitten;
- Fig. 6: Den Schaumstoffträger aus Figur 5 mit weiteren eingebrachten Einschnitten;
- Fig. 7: Den Schaumstoffträger aus Figur 6, wobei die in Figur 6 gezeigten Einschnitte aufgeweitet sind;
- Fig. 8: Die Darstellung aus Figur 7 mit in den weiteren Einschnitten eingebrachten Folienelementen;
- Fig. 9: Die Darstellung aus Figur 8, wobei auch die weiteren Einschnitte wieder geschlossen wurden;
- Fig. 10: Eine Darstellung, bei der einzelne Streifen abgetrennt wurden;
- Fig. 11: Eine Darstellung, eines einzelnen komprimierten Streifens, der von der Großrolle geschnitten wurde;
- Fig. 12: Eine Darstellung, bei der die Kompression wieder teilweise zurückgestellt wurde;
- Fig.13: Eine perspektivische Darstellung eines Schaumstoffträgers mit Einschnitten;
- Fig. 14: Eine alternative Vorgehensweise zur Einbringung eines Folienelements;
- Fig. 15: Eine weitere alternative Vorgehensweise zur Einbringung eines Folienelements;
- Fig. 16: eine mit Selbstklebung komprimierte Schaumstoffbahn mit Folienelementen, die sich komplett in Dickenrichtung erstecken;
- Fig. 17: eine Schnittdarstellung einer Dichtband-Großrolle im aufgerollten, komprimierten Zustand;
- Fig. 18: ein einzelnes Dichtband in einem komprimierten Zustand;
- Fig. 19: das Dichtband in einem Einbauzustand.

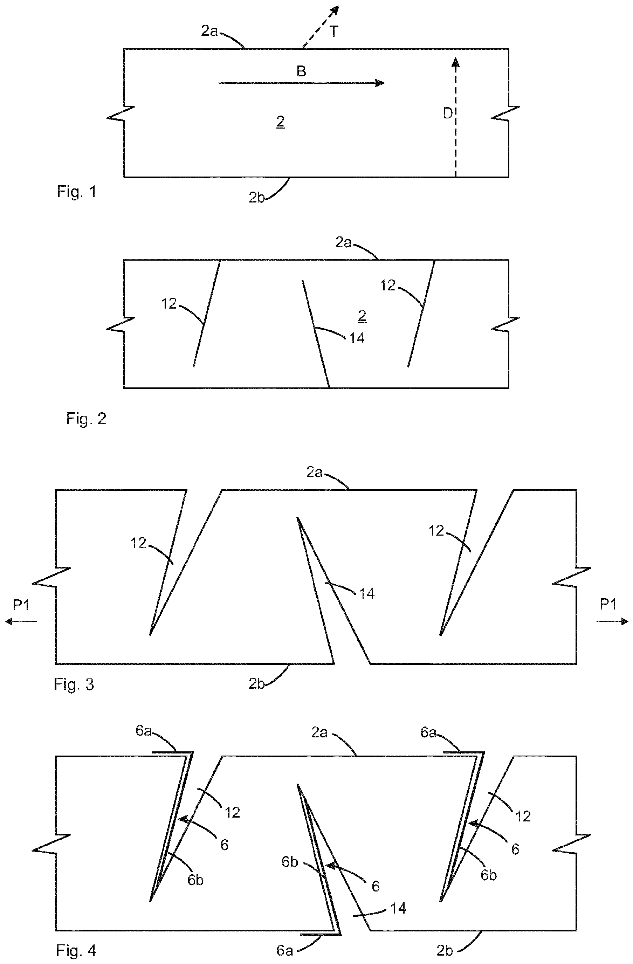

Figur 1 zeigt eine Darstellung eines Schaumstoffträgers 2. Dieser Schaumstoffträger 2 wird zu Beginn des Verfahrens in einer Transportrichtung T transportiert, wobei diese Transportrichtung hier senkrecht zu der Figurenebene verläuft. Diese Transportrichtung T ist damit auch die Längsrichtung des Schaumstoffträgers. Das Bezugszeichen D kennzeichnet eine Dickenrichtung, welche hier senkrecht zu der Transportrichtung bzw. der Längsrichtung steht. Das Bezugszeichen B kennzeichnet eine Breitenrichtung des Schaustoffträgers.

Das Bezugszeichen 2a kennzeichnet eine erste Oberfläche des Schaumstoffträgers 2 und das Bezugszeichen 2b eine zweite Oberfläche. Diese beiden Oberflächen liegen einander gegenüber bzw. weisen zwischen sich den eigentlichen Schaumstoff auf. Auch die Dickenrichtung D erstreckt sich zwischen diesen beiden Oberflächen. Bevorzugt werden in beide Oberflächen 2a und 2b jeweils mehrere Einschnitte 12, 14 eingebracht.

Bei der in Figur 2 gezeigten Situation wurden in den Schaumstoffträger 2, das heißt sowohl in die erste Oberfläche 2a als auch die zweite Oberfläche 2b, jeweils Einschnitte 12 und 14 eingebracht. Dabei wurden die Einschnitte 12 in die erste Oberfläche 2a eingebracht und die zweiten Einschnitte 14 in die zweite Oberfläche 2b. Man erkennt, dass diese Schnitte sich nicht entlang der vollständigen Dickenrichtung erstrecken, sondern um beispielsweise mehr als 50 %, bevorzugt mehr als 60 % und besonders bevorzugt mehr als 70 % der Dickenrichtung. Die Tiefe dieser Einschnitte ist vorteilhaft, um bei einem weiteren Verfahrensschritt durch Spannung des Trägers eine ausreichende Aufweitung der Schnitte gewährleisten zu können.

Bei der in Figur 3 gezeigten Situation wird der Schaumstoffträger, wie durch die kleinen Pfeile P1 gezeigt, gespannt, sodass sich die Einschnitte 12 und 14 jeweils aufweiten. In diesem Zustand ist es, wie in Figur 4 gezeigt, möglich, in die Einschnitte Folienelemente 6 einzubringen. Dabei wird ein erster Abschnitt 6a an der Oberfläche 2a selbst angelegt bzw. angeklebt und ein zweiter Abschnitt 6b des Folienelements 6 ragt in den Einschnitt hinein. Diese Folienelemente werden dabei bevorzugt sowohl in die ersten Einschnitte 12 als auch die zweiten Einschnitte 14 eingebracht.

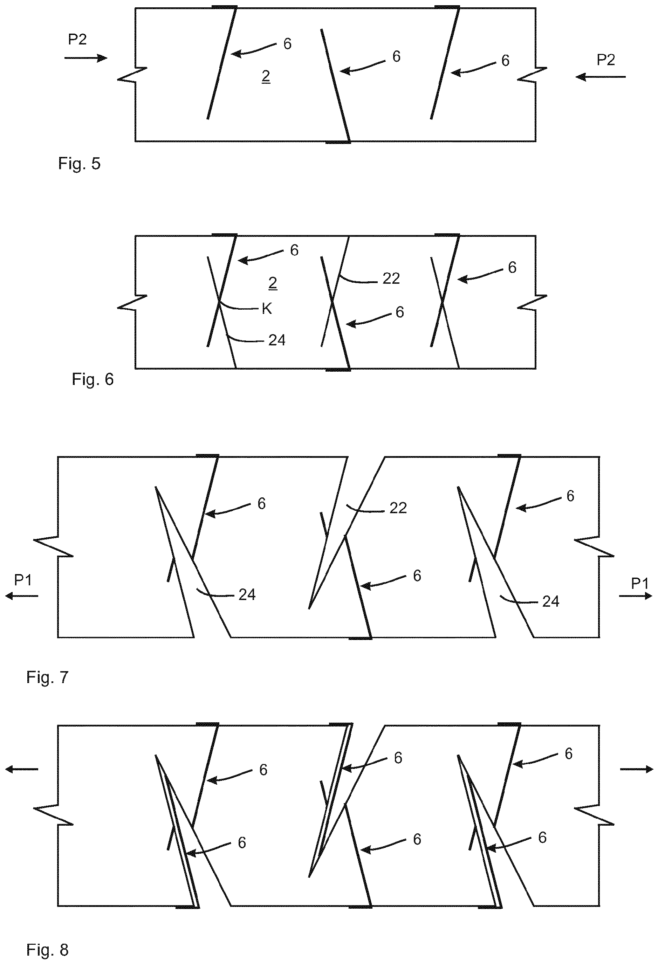

Bei der in Figur 5 gezeigten Situation wird die Spannung wieder gelöst (P2) und entsprechend schließen sich die jeweiligen Schnitte 12 und 14, sodass nunmehr in den Schnitten die einzelnen Klebefilme (und -schichten) 6 einlegen. Diese Klebefilme halten dabei bevorzugt auch die Einschnitte geschlossen.

In einem weiteren Verfahrensschritt (Fig. 6) werden weitere Schnitte 22 und 24 wieder in die erste Oberfläche 2a sowie die zweite Oberfläche 2b des Schaumstoffträgers eingebracht. Dabei erkennt man, dass diese weiteren Schnitte 22 und 24 jeweils die ersten Schnitte 12 und 14 schneiden bzw. durchtrennen. Auch die Folienelemente werden an einem bestimmten Kreuzungspunkt K durch die zweiten Einschnitte 22 und 24 getrennt.

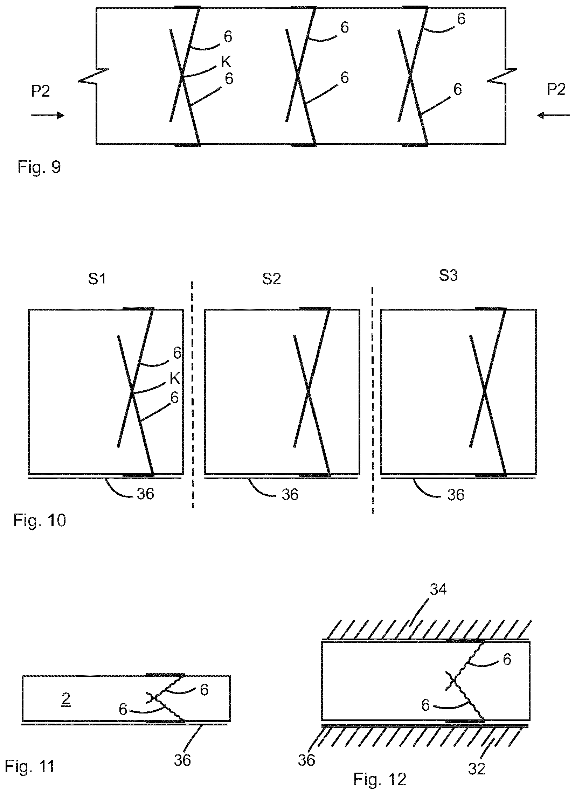

Bei einem weiteren in Figur 7 gezeigten Verfahrensschritt wird wieder der Schaumstoffträger gespannt, sodass sich die weiteren Einschnitte 22 und 24 aufweiten. Bei der in Figur 8 gezeigten Situation werden in diese weiteren Schnitte nunmehr wiederum Folienelemente eingebracht. Diese Folienelemente weisen wieder einen Abschnitt auf, der in die jeweiligen Einschnitte hereinragt sowie einen weiteren Abschnitt, der an der jeweiligen Oberfläche anliegt. Bei der in Figur 9 gezeigten Situation wird die Spannung wieder gelockert und es entstehen insgesamt eine Vielzahl von Folienelementen innerhalb des Schaumstoffträgers, die sich an einem Kreuzungspunkt K (genauer einer Kreuzungslinie K) kreuzen. Allerdings entsteht jedoch in der Dickenrichtung ein geschlossener Verlauf des Folienelements (bzw. der beiden Folienelemente). Die wie oben beschrieben vorbereitete Bahn mit den eingelegten Folienstreifen wird vorzugsweise auf eine Selbstklebung komprimiert und zur Großrolle aufgewickelt. Dies ist hier nicht gezeigt.

In einem weiteren in der Figur 10 gezeigten Verfahrensschritt werden jeweils Streifen S1, S2 und S3 abgetrennt bzw. Rollen von der Großrolle. Jeder dieser Streifen enthält zwei Folienelemente 6, die sich an dem Kreuzungspunkt K kreuzen. Bei der in Fig. 9 gezeigten Situation wird der Schaumstoff auf eine (dort nicht gezeigte) Selbstklebung komprimiert. Bei der In Figur 10 gezeigten Situation ist jeweils ein Selbstklebestreifen dargestellt, der an der Oberfläche 2b des Schaumstoffträgers anhaftet und bevorzugt flächig anhaftet. Dieser Selbstklebestreifen überdeckt damit auch den Endabschnitt 6a, der aus dem Schnitt 14 herausragt.

In einem Einbauzustand stellt sich der Schaumstoff vom voll komprimierten Zustand (vgl. Fig. 11) wieder teilweise zurück, die Folienelemente verbleiben jedoch in seinem Inneren lückenlos (vgl. Fig. 12). Mittels des Selbstklebestreifens kann der Schaumstoff an dem Wandungselement 32 befestigt sein. Das Bezugszeichen 34 bezieht sich auf ein zweites Wandungselement.

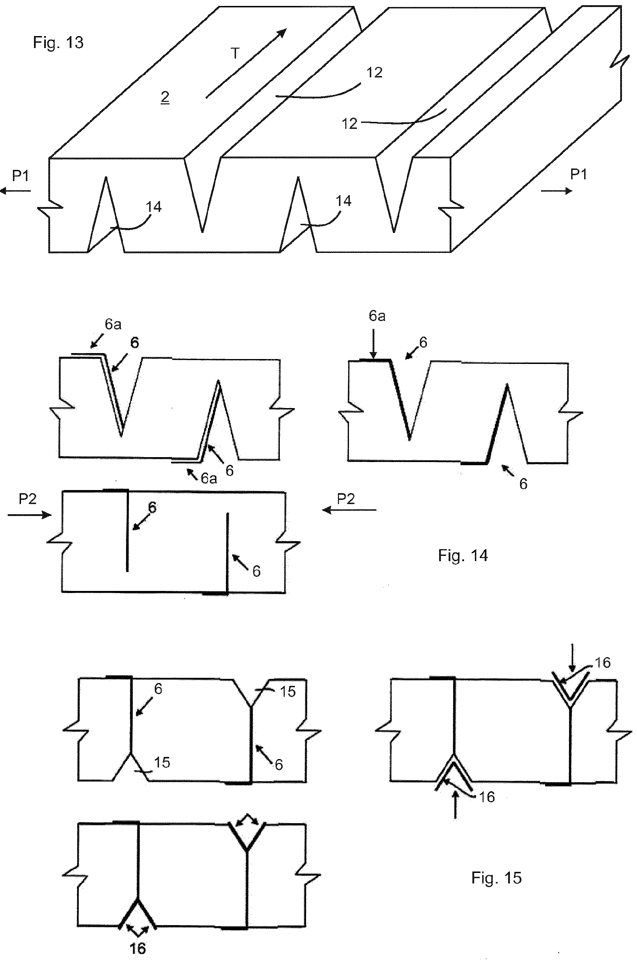

Figur 13 zeigt eine perspektivische Darstellung eines Schaumstoffträgers mit eingebrachten und aufgeweiteten Schnitten 12 und 14. Bei der in Figur 14 gezeigten Situation wird wiederum in einen ersten Einschnitt ein Folienelement 6 eingebracht, wobei der Endabschnitt 6a des Folienelements an der Oberfläche 2a anliegt (vgl. Fig. 14). Bei dem rechten oberen in Figur 14 gezeigten Bild liegt das Folienelement an einer Flanke des Einschnitts an bzw. klebt dort. In einem weiteren Verfahrensschritt wird der Schaumstoffträger wieder entspannt, sodass insgesamt das Folienelement in seinem Inneren vorhanden ist, wobei sich hier das Folienelement in der Dickenrichtung erstreckt (unteres Bild in Fig. 14).

Bei der in Figur 15 gezeigten Situation wird wiederum an mindestens einer Oberfläche ein V-förmiger Einschnitt 15 eingebracht, welcher jeweils einem Schnitt 12 oder 14 gegenüberliegt d.h. in der Breitenrichtung des Schaumstoffträgers nicht gegenüber dem ihm zugeordneten Schnitt 12 bzw. 14 verschoben ist. In diesen Einschnitt 15 wird wiederum ein Folienelement 16 eingelegt (vgl. das obere rechte Bild von Fig. 15). Dieses Folienelement weist hier eine V-Form auf, die sich bevorzugt an beide Flanken des Einschnitts anlegt. In einem weiteren Verfahrensschritt wird auch hier die Spannung wieder zurückgestellt (unteres Bild von Fig. 15) und auf diese Weise ergibt sich auch wieder ein durchgehendes Folienelement.

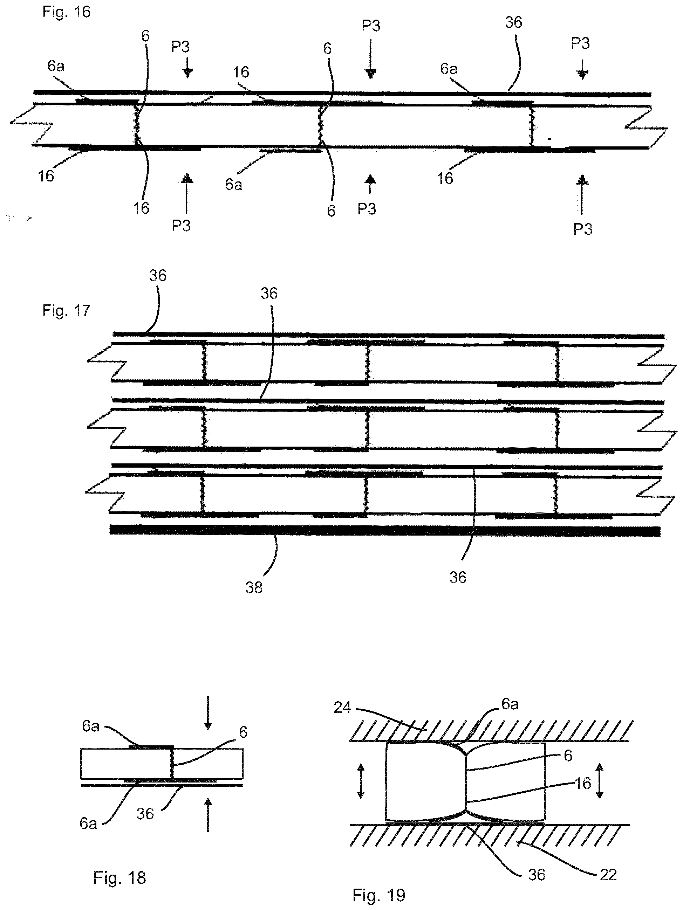

Fig. 16 zeigt eine Situation, bei der das bereits mit eingelegten Folienstreifen versehene Band in der Richtung P3 komprimiert wurde. Insbesondere erfolgt dabei die Komprimierung auf eine Selbstklebung bzw. eine Selbstklebefolie 36. Diese Selbstklebefolie liegt in diesem Fall an der ersten Oberfläche 2a an. Auch kommt diese Selbstklebefolie flächig auf den Abschnitten 6a des Folienstreifens 6 bzw. auf dem Folienstreifen 16 (genauer dem aus dem Schnitt 15 herausragenden Teil dieses Folienstreifens 16) zu liegen.

Fig. 17 zeigt eine Darstellung, bei welcher der Schaumstoffträger als Großrolle aufgewickelt ist. Von dieser Großrolle können Rollen bzw. Streifen in Verwendungsbreite abgeschnitten werden, welche vorzugsweise mind. 1 in Dickenrichtung durchgehendes Folienelement (aus zwei sich kreuzenden bzw. berührenden Folienelementen) aufweisen. Das Bezugszeichen 38 kennzeichnet einen Wickelkern dieser Großrolle.

In der in Figur 18 gezeigten Situation wird wiederum das Dichtband komprimiert dargestellt. Figur 19 zeigt eine Darstellung eines Dichtbandes in einer Umgebung, das heißt beispielsweise in einem Gebäude. Dabei beziehen sich die Bezugszeichen 32 und 34 auf zwei Wandungselemente, zwischen denen das erfindungsgemäße Dichtband angeordnet ist. Man erkennt, dass das Folienelement sich vollständig in der gesamten Abstandsrichtung zwischen den beiden Wandungen 32 und 34 erstreckt.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 2: Schaumstoffträger
- 2a: erste Oberfläche des Schaumstoffträgers
- 2b: zweite Oberfläche des Schaumstoffträgers
- 6: Folienelemente, Klebefilme, Klebstoff flüssig
- 6a: erster Abschnitt des Folienelements
- 6b: zweiter Abschnitt des Folienelements
- 12: erster Einschnitt
- 14: zweiter Einschnitt
- 15: V-förmiger Einschnitt
- 16: Folienelement
- 22: weiterer Schnitt
- 24: weiterer Schnitt
- 32: Wandungselement
- 34: Wandungselement
- 36: Selbstklebung (SK)
- 38: Wickelkern
- T: Transportrichtung
- D: Dickenrichtung
- B: Breitenrichtung
- K: Kreuzungspunkt
- P1: Pfeile, Spannung
- P2: Pfeile, Spannung lösen
- P3: Pfeile, Komprimierung
- S1: Streifen
- S2: Streifen
- S3: Streifen

## Patentansprüche

1. Dichtband (10) mit einem Schaumstoffträger, wobei dieser Schaumstoffträger sich in einer vorgegebenen Längsrichtung (L) erstreckt und eine erste Oberfläche (2a) und eine zweite Oberfläche (2b) aufweist und diese Oberflächen (2a, 2b) einander gegenüberliegen,
wobei
in der ersten Oberfläche ein erster Einschnitt (12) angeordnet ist, der sich zumindest auch in einer Dickenrichtung (D) erstreckt, wobei sich diese Dickenrichtung von der ersten Oberfläche (2a) zu der zweiten Oberfläche (2b) erstreckt, sowie in der zweiten Oberfläche (2b) ein zweiter Schnitt (24), der sich ebenfalls zumindest auch in dieser Dickenrichtung (D) erstreckt, wobei sich wenigstens einer der Schnitte in einem vorgegebenen von 0° verschiedenen Winkel gegenüber der Dickenrichtung (D) erstreckt und in den beiden Schnitten ein Folienstreifen (6), ein Klebebandstreifen und/oder ein klebstoffartiges Medium eingebracht ist,
**dadurch gekennzeichnet, dass**
sich der erste Schnitt (12) und der zweite Schnitt (24) kreuzen.

2. Dichtband (10) nach wenigstens einem der vorangegangen Ansprüche,
**dadurch gekennzeichnet, dass**
wenigstens ein Abschnitt (6a) eines Folienstreifens (6) auch an einer Oberfläche (2a, 2b), in der der Schnitt eingebracht wurde, anliegt.

3. Dichtband (10) nach wenigstens einem der vorangegangen Ansprüche,
**dadurch gekennzeichnet, dass**
ein durchgehendes Folienband bzw. eine durchgehende Absperrung erreicht wird.

4. Dichtband (10) nach Anspruch 1,
**dadurch gekennzeichnet, dass**
ein weiterer Schnitt (15) ein V-förmiges Profil aufweist.

5. Dichtband (10) nach Anspruch 4,
**dadurch gekennzeichnet, dass**
der V-förmige Schnitt (15) weniger tief in den Schaumstoffkörper ragt als die ersten Einschnitte.

6. Dichtband (10) nach Anspruch 4,
**dadurch gekennzeichnet, dass**
der V-förmige Schnitt (15) um weniger als 60%, bevorzugt um weniger als 50%, bevorzugt um weniger als 40% und besonders bevorzugt um weniger als 30% der Dicke des Schaumstoffträgers in diesen hineinragt.

7. Dichtband nach wenigstens einem der vorherigen Ansprüche,
**dadurch gekennzeichnet, dass**
in wenigstens einer Oberfläche ein weiterer Schnitt (15) vorgesehen ist und in diesem weiteren Schnitt ein Folienstreifen oder ein Klebebandstreifen doppellagig einliegt.

8. Dichtband (10) nach wenigstens einem der vorherigen Ansprüche,
**dadurch gekennzeichnet, dass**
es sich bei dem Schaumstoff um einen imprägnierten Schaumstoff handelt.

9. Dichtband (10) nach wenigstens einem der vorherigen Ansprüche,
**dadurch gekennzeichnet, dass**
es sich bei dem Schaumstoff um eine rückstellfähigen Schaumstoff handelt.

10. Dichtband (10) nach wenigstens einem der vorherigen Ansprüche,
**dadurch gekennzeichnet, dass**
das Dichtband (10) komprimiert und besonders bevorzugt als Rolle konfektioniert ist.

## Claims

1. Sealing tape (10) having a foam carrier, wherein this foam carrier extends in a predetermined longitudinal direction (L) and has a first surface (2a) and a second surface (2b) and these surfaces (2a, 2b) are opposite to each other,
wherein
a first cut (12) is arranged in the first surface, which extends at least also in a thickness direction (D), wherein this thickness direction extends from the first surface (2a) to the second surface (2b), as well as a second cut (24) is arranged in the second surface (2b), which likewise extends at least also in this thickness direction (D), wherein at least one of those cuts extends in a predetermined angle which is different from 0° relative to the thickness direction (D) and within these two cuts a foil strip (6), an adhesive tape strip and/or an adhesive-like media is inserted, **characterized in that**
the first cut (12) and the second cut (24) cross each other.

2. Sealing tape (10) according to at least one of the preceding claims,
**characterized in that**
at least one section (6a) of a foil strip (6) also abuts on a surface (2a, 2b) into which the cut has been made.

3. Sealing tape (10) Sealing tape (10) according to at least one of the preceding claims,
**characterized in that**
a continuous foil tape or a continuous barrier is reached.

4. Sealing tape (10) according to claim 1,
**characterized in that**
a further cut (15) has a v-formed profile.

5. Sealing tape (10) according to claim 4,
**characterized in that**
the v-formed cut (15) protrudes less deep into the foam material body than the first cuts.

6. Sealing tape (10) according to claim 4,
**characterized in that**
the v-formed cut (15) protrudes into the foam material carrier about less than 60%, preferably about less than 50%, preferably about less than 40% and particularly preferably about less than 30% of the thickness of the foam material carrier.

7. Sealing tape according to at least one of the preceding claims, **characterized in that**
in at least one surface a further cut (15) is provided and a foil strip or a double-layered adhesive tape strip is placed in this further cut.

8. Sealing tape (10) according to at least one of the preceding claims,
**characterized in that**
this foam material is an impregnated foam material.

9. Sealing tape (10) according to at least one of the preceding claims,
**characterized in that**
the foam material is a foam material which is able to recover.

10. Sealing tape (10) according to at least one of the preceding claims,
**characterized in that**
the sealing tape (10) is compressed and particularly preferably customized as a roll.

## Revendications

1. Bande d'étanchéité (10) avec un support en mousse, ce support en mousse s'étendant dans une direction longitudinale prédéterminée (L) et présentant une première surface (2a) et une deuxième surface (2b) et ces surface (2a, 2b) étant opposées l'une à l'autre,
dans lequel
une première découpe (12) est disposée dans la première surface, qui s'étend au moins également dans une direction d'épaisseur (D), cette direction d'épaisseur s'étendant de la première surface (2a) à la deuxième surface (2b), ainsi qu'une seconde découpe (24) dans la seconde surface (2b), qui s'étend également au moins dans cette direction d'épaisseur (D), dans lequel au moins une des découpes s'étend à un angle prédéterminé différent de 0 ° par rapport à la direction d'épaisseur (D) et une bande de film (6), une bande de ruban adhésif et/ou un milieu de type adhésif est introduit dans les deux découpes, **caractérisée en ce que**
la première découpe (12) et la deuxième découpe (24) se croisent.

2. Bande d'étanchéité (10) selon au moins l'une des revendications précédentes,
**caractérisée en ce que**
au moins une section (6a) d'une bande de film (6) repose également sur une surface (2a, 2b) dans laquelle la découpe a été réalisée.

3. Bande d'étanchéité (10) selon au moins l'une des revendications précédentes,
**caractérisée en ce que**
une bande continue de film ou une barrière continue est obtenue.

4. Bande d'étanchéité (10) selon la revendication 1,
**caractérisée en ce que**
une autre découpe (15) a un profil en forme de V.

5. Bande d'étanchéité (10) selon la revendication 4,
**caractérisée en ce que**
la découpe en forme de V (15) fait saillie moins profondément dans le corps en mousse que les premières découpes.

6. Bande d'étanchéité (10) selon la revendication 4,
**caractérisée en ce que**
la découpe en forme de V (15) fait saillie dans le support en mousse de moins de 60%, de préférence de moins de 50%, de préférence de moins de 40% et de manière particulièrement préférée de moins de 30% de l'épaisseur du support de mousse.

7. Bande d'étanchéité selon au moins l'une des revendications précédentes,
**caractérisée en ce que**
une autre découpe (15) est prévue dans au moins une surface et une bande de film ou une bande de ruban adhésif est insérée en deux couches dans cette autre découpe.

8. Bande d'étanchéité (10) selon au moins l'une des revendications précédentes,
**caractérisée en ce que**
la mousse est une mousse imprégnée.

9. Bande d'étanchéité (10) selon au moins l'une des revendications précédentes,
**caractérisée en ce que**
la mousse est une mousse pouvant revenir à son état initial.

10. Bande d'étanchéité (10) selon au moins l'une des revendications précédentes,
**caractérisée en ce que**
la bande d'étanchéité (10) est comprimée et de manière particulièrement préférée réalisée sous la forme d'un rouleau.
